# EUROPEAN PATENT SPECIFICATION

(11) **EP 0 953 059 B1**
(45) Date of publication and mention of the grant of the patent: **18.07.2001**
(21) Application number: 97948096.9
(22) Date of filing: 09.12.1997
(51) Int. Cl.: C21D 8/00, C21D 1/10, C21D 9/60

(54) **METHOD FOR STRETCHING OF A PROFILE IN AN INDUCTION HEAT TREATMENT PROCESS**
VERFAHREN ZUM STRECKEN EINES PROFILS WÄHREND EINES INDUKTIONSWÄRMEBEHANDLUNGSVERFAHRENS
PROCEDE D'ETIREMENT DE PROFILE DANS UN PROCESSUS DE TRAITEMENT THERMIQUE PAR INDUCTION

(30) Priority: 16.12.1996 SE 9604615
(43) Date of publication of application: 03.11.1999
(73) Proprietor: Accra Teknik AB, 943 31 Öjebyn (SE)
(72) Inventor: SUNDGREN, Anders, S-950 17 Sunderbyn (SE); LINDBERG, Mats, S-976 31 Lulea (SE); BERGLUND, Göran, S-954 32 Gammelstad (SE)
(74) Representative: Onn, Thorsten
(86) International application number: SE9702054
(87) International publication number: WO9827235

(56) References cited:
- US-A- 4 826 542
- DERWENT'S ABSTRACT, No. 94-356015/44, Week 9444; & SU,A,1 822 426 (AVTOPRIBOR PRODN ASSOC) 15 June 1993.

## Description

The present invention relates to a method of quenching profiled or shaped elements produced from sheet billets in accordance with the preamble of Claim 1.

Shaping of relatively elongated sheet billets to produce finished contoured or profiled elements and the subsequent quenching of such profiles is a continuous process carried out in a shaping or contour mill in which sheet billets are first advanced through and worked by a set of shaping tools in a number of mutually sequential passes such as to bring the billet to a desired shape, said number of passes depending on the billet dimensions, its material thickness and the complexity of the profiling or contouring operation, and in which sequential passes the shaping tools are located progressively closer to one another as seen in the feed direction of the sheet billet. The resultant profiled elements are quench hardened in a subsequent stage of the manufacturing process, by first passing the profiles through a heating device, preferably an inductor, and then rapidly cooling the profiles, that is quenching said profiles, by spraying the same with water in a water shower arrangement, for instance.

A serious problem with quenching the profiles is that they tend to buckle during the process. Profiles that buckle during the quenching process must be straightened or, in the worst case, scrapped. Buckling of the profiled elements is caused, among other things, by the internal stresses that are generated in the sheet billet during the manufacturing process, the contouring process, and released in the quenching process.

Prior publication SU 1 822 426 teaches a heat treatment machine for treating long, thin sections of constant cross-section. This heat treatment machine is comprised of an inductor, a shower arrangement, and a number of rollers disposed on respective sides of the heating arrangement, in accordance with the preamble of Claim 1. When seen in the direction of movement of the profiles, these rollers include rear rollers, so-called feed rolls that are driven by a controllable speed drive unit, and a number of front rollers, so-called pull or draw rollers. In order to prevent changes in the shape of the profiles, the profiles are stretched by rotating the pull-rollers located upstream of the heating zone at a higher peripheral speed than the rear feed rollers. In the case of this known machine, the rear feed rollers and the front pulling rollers are coupled together so as to be driven commonly via one single drive device and are synchronized to mutually different peripheral speeds via a gear arrangement, such that the peripheral speed of the front pull-rollers will be somewhat greater than the peripheral speed of the feed rollers.

Subsequent to a profile, or a batch of profiles, having past through the heat treatment device, the profile, or profiles. is/are checked with respect to shape correctness, such as distortion, straightness, flatness, etc. It will be understood, that the tensile force acting on the profile as it is drawn through the heat treatment device may also require adjustment, depending on the result of the check.

It has also been found desirable in recent times to be able to control the collapse-behaviour of this type of quenched profile without needing to take direct constructive measures. This is effected by controlling the quenching process in a manner to obtain regions of varying hardness and mechanical strength. This is achieved in practice, by controlling individually the normally hundreds of small spray nozzles included in the spray arrangement and arranged in the transverse direction of the profile, so as to vary the profile quenching pattern. Alternatively, the nozzle water pressure may be changed so as to influence the impact properties of the cooling water and therewith the cooling properties of the arrangement. It has namely been found that the cooling phases that occur during the quenching or hardening process, the so-called vapour film phase, the boiling phase, and the convection/conduction phase, can be influenced to a great extent, by varying the impact force of the cooling water.

The aforementioned measures enable the mechanical strength of the profile to be varied in three degrees of freedom which, seen in a normal plane to the long axis of the profile in said plane, include the Y-axis. Z-axis and X-axis along its length. It will be evident from this that the tensile force acting on the profile, or more specifically the tensile stress created by said tensile force, must be continuously controlled and varied during the profile stretching process. For instance, the tensile stress may not under any circumstances exceed US 4 826 542 discloses a metod for processing a metal to obtain a predictable amount of a particular micro-structure. The method comprises continously moving the material along a heating zone and a cooling zone by means of rotatable driven rollers mounted on respective sides of said heating zone and said cooling zone. When seen in the direction of movement of the material the secound rotatable rollers being rotated at a rate of rotation greater than the first rotatable means at a proportional to the desired reduction ration of the material. the given yield point in tension with respect to that part of the profile that is located at that time within the heat treatment zone and thus between the billet feeding and billet pulling rollers.
There is thus a need to provide on the basis of known technology a method which will allow the tensile stress to be controlled and adjusted continuously in relation to the properties of the profile during the actual profile stretching process and during the heat treatment process.
Continuous control of the tensile stress would also enable the actual profile stretching process to be controlled in a predetermined manner, for instance with the aid of a computer and on the basis of a mathematical function or curve stored in the computer.

It is also conceivable that with the aid of appropriate measuring equipment, the profile stretching force and therewith the tensile stress could be feedback controlled and adjusted through the medium of so-called adaptive control, that is to say by continuously checking the trueness of the profile immediately after the profile has passed the hardening zone, and continuously correcting the profile stretching force on the basis of the measuring data obtained coupled with computer-stored reference data.

The object of the present invention is to provide on the basis of known technology a method with which this desiderata is realized, and more particularly a method which enables the tensile stress to which the profile is subjected during the profile stretching process to be controlled and adjusted in a much improved manner.

This has not been possible with those heat treatment plants known hitherto, but is achieved with a method according to the present invention that has the characteristic features set forth in the characterizing clause of Claim 1. It is possible to maintain the trueness of the profiled and hardened sheet-metal profile while maintaining a higher rate of production at the same time.

The invention will now be described in more detail with reference to an exemplifying embodiment thereof and also with reference to the accompanying drawing, the single Figure of which illustrates an example of heat treatment apparatus for carrying out the inventive method.

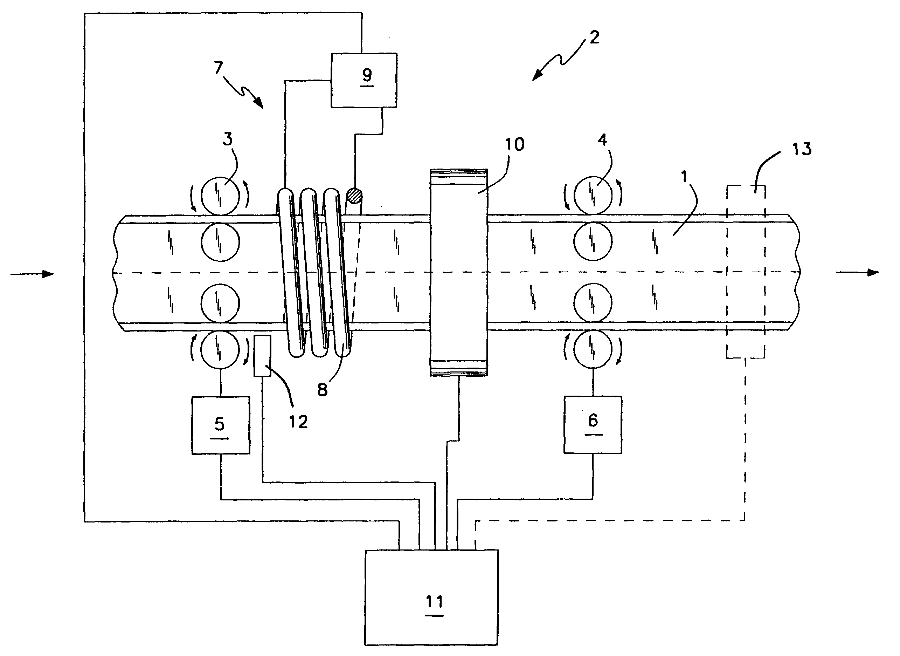

Figure 1 illustrates schematically a heat treatment apparatus in which a profiled element 1 is worked into a finished profile, by means of an array of rotatably driven shaping tools in a shaping mill (not shown), said profile having been worked to a finished profiled product in an earlier stage (not shown). As will be evident from the drawing, the profile 1 moves continuously in its profiling or shaping direction to a quenching or hardening zone 2, while driven by an array of rear feed rollers 3 and front profile pulling or stretching rollers 4 disposed on respective sides of the hardening zone, as seen in the direction of profile movement. The feed rollers and pulling rollers are driven independently by a respective drive unit 5 and 6. Ideally, the drive units have the form of electronically controlled d.c. motors, to enable the rotary speeds of the rollers to be continuously controlled.

The hardening zone 2 includes an inductor 7 having a water-cooled coil 8 connected to a frequency converter 9, and a water-shower device 10 for rapidly cooling that part of the profile heated by the inductor 7. The shower device 10 includes hundreds of small shower nozzles disposed in the cross-direction of the profile and/or peripherally around said profile, for the purpose of controlling the quenching process and thus the profile hardening pattern. These shower nozzles are adapted for individual control between an open and a closed state with the aid of a computer 11, such that certain parts of the profile where the nozzles are temporarily closed will be cooled more slowly than those parts where the nozzles are open. The computer 11 can, of course, be programmed to control other parameters, such as water pressure and thereby the impact properties of the water for instance, by controlling the pump means responsible for delivering water to the nozzles (not shown in the Figure).

The frequency converter 9 is actuated as the profile 1 passes through the hardening zone 2, so that current will flow through the coil 8. The A.C. magnetic field of the coil 6 austempers the profile, e.g. to a temperature of 800°C-950°C, whereafter the profile is cooled rapidly by the water issuing from the water shower arrangement 8.

That part of the profile 1 located in the hardening zone 2 is stretched during the hardening process. The profile is stretched by appropriate selection of the peripheral speeds of the respective roller-pairs 3, 4 coacting with the profile, wherewith the front pair of pulling rollers 4 rotate at a peripheral speed which is appropriately higher than the peripheral speed of the rear feed rollers 3. The profile 1 is stretched as it passes through the hardening zone in order to control said hardening process and therewith prevent the release of internal tensile and compressive stresses (intrinsic stresses) in a manner that will disfigure or deform the profile.

Mounted in the movement path of the profiles is a conventional sensor 12 which determines the instantaneous or current position of a profile passing through the heat treatment device. The sensor 12 will preferably be of the type that registers the position of the leading end of an arriving profile 1 as it enters the hardening zone, wherein the position of the profile is calculated continuously by the computer 11 on the basis of the speed at which the full length of the profile is advanced and the distance covered by said profile.

As the relative current position of the profile 1 is established, the tensile stress acting on that part of the profile which is located temporarily in the hardening zone 2, i.e. that part of the profile located between the feed rollers 3 and the profile pulling rollers 4, is controlled continuously. The tensile stress is determined by measuring the torque acting on the drive shaft of the pulling rollers 4, wherein the force acting on the profile 1 can be calculated readily for a given radius of the pulling rollers.

Because the two units 5 and 6 that drive respective feed rollers 3 and pulling rollers 4 are separate from each other and have controllable speeds, the profile can be advanced at a varying speed and therewith with a varying stretching force, by adjusting the speed of the pulling rollers 4 to a level slightly above the speed of the feed rollers 3. The use of separate and mutually independent drive units 5, 6 also has the advantage of allowing the hardening process to be varied within a further degree of freedom, namely that of controlling the speed at which the profile moves through the hardening zone, and consequently while retaining the possibility of controlling the tensile stress acting on the profile 1.

Ideally, the drive unit 5, 6 will include electronically controlled d.c. motors, since such motors enable power and torque to be measured in a simple manner in addition to having very good speed control properties.

The data registered at each moment in time, i.e. the tensile force acting on the profile 1 and the position of the profile, are fed to the computer 11 which then determines the tensile force that should preferably act on the profile 1 in the cross-sectional part or parting line concerned, on the basis of these data and computer-stored reference data in the form of a mathematical function or curve. The value determined for controlling the tensile stress at cross-sectional parts of the profile given at these moments in time is based on data that has been obtained with a measuring and control operation carried out after the hardening process with respect to shape trueness of the profile, such as straightness, distortion and flatness at given positions and given tensile stresses, and partly on the material properties of the profile such as primarily the maximum permitted yield point in tension of the profile 1 in given cross-sections along its total length, such maximum permitted yield point being either calculated or obtained by practical measurement tests.

It is also conceivable that the tensile force, and therewith the tensile stress, could be controlled and adjusted by means of a feedback process, by so-called adaptive control, by suitable selection of measuring equipment. In other words, this control could be effected by continuously measuring the shape-trueness of the profile in a measuring zone 13 immediately after the profile has passed through the hardening zone, as indicated in chain lines in the Figure, and therewith continuously correcting the tensile force on the basis of obtained measuring data and predetermined, computer-stored reference data. Since the technology by means of which continuous measurement of the profile can be achieved is already known and is not the subject of invention, it will not be described in detail in this document.

The inventive method enables the tensile stress to be readily controlled and adjusted continuously in relation to the properties of the profile concerned, and therewith in relation with its appearance during the heat treatment process, during the actual profile stretching process. The method also allows the use of an adapted so-called adaptive control which enables deformations and shape errors in the finished sheet-metal profile to be discovered and corrected already during the hardening process, therewith obviating the need of time-consuming quality checks and subsequent straightening operations on the finished profiles.

## Claims

1. A method of quenching profiled elements (1) produced by profiling or shaping sheet billets while using a heat treatment device that includes a hardening zone (2) provided with an inductor (7) and a water shower arrangement (10), wherein the profiles are fed through the hardening zone by means of driven rear so-called feed rollers (3) and front so-called pulling rollers (4) mounted on respective sides of the hardening zone and rotated at mutually different peripheral speeds so as to keep the profile stretched and therewith avoid changes in the shape of the profile during the hardening process, **characterized** in that with the intention of optimally stretching a given profile during the hardening process in relation to the properties of said profile and thereby in relation to its appearance during the heat treatment process, the tensile stress to which the profile is subjected during the profile stretching process is controlled by driving the rear feed rollers (3) and the front drive rollers (4) by means of mutually independent drive units (5 and 6 respectively), wherein said drive units (5, 6) are constructed to enable the relative peripheral speeds of said rollers to be controlled continuously and independently, wherein the relative position of the profile (1) is determined during the profile stretching process, wherein the tensile stress to which the profile is subjected is calculated at each moment in time, whereby, on the basis of these data and on the basis of predetermined reference data concerning said given profile, the tensile stress is controlled and adjusted to a value determined on the basis of said reference data, with the aid of said drive units (5, 6).

2. A method according to Claim 1, **characterized** in that the tensile stress to which the profile is subjected in signal form is fed to a computer (11), in which the predetermined reference data is stored, wherein said computer on the basis of said data is used to control and adjust the tensile stress of the profile.

3. A method according to any one of the preceding Claims, **characterized** in that the determined tensile stress control value is based on data that has been obtained in conjunction with a measuring and control operation following said hardening process and concerning the shape-trueness of the profile, such as its straightness, distortion and flatness, and also on the material properties of the profile, such as its maximum permitted yield point in tension.

4. A method according to any one of the preceding Claims, **characterized** by using the method to control the tensile stress of a profiled element that has been given parts that are softer with respect to mechanical strength, by controlling the hardening process section-wise.

5. A method according to any one of the preceding Claims, **characterized** by using d.c. motors having electronically controllable speeds as the drive units (5, 6).

## Patentansprüche

1. Verfahren zum Abschrecken profilierter Elemente (1), die durch Profilieren oder Umformen von Platinen erzeugt werden, unter Einsatz einer Wärmebehandlungseinrichtung, die eine Härtezone (2) aufweist, die mit einer Induktionsvorrichtung (7) und einer Wasserberieselungsanlage (10) versehen ist, wobei die Profile durch die Härtezone mit Hilfe angetriebener, hinterer, sogenannter Zuführwalzen (3) und vorderer, sogenannter Zugwalzen (4) transportiert werden, die auf der jeweiligen Seite der Härtezone angeordnet sind, und mit voneinander verschiedenen Umfangsgeschwindigkeiten gedreht werden, um das Profil gestreckt zu halten, und hierdurch Änderungen der Form des Profils während des Härtevorgangs zu vermeiden, dadurch gekennzeichnet, dass zum Zwecke der optimalen Streckung eines vorgegebenen Profils während des Härtevorgangs in bezug auf die Eigenschaften des Profils und daher in bezug auf dessen Erscheinungsbild während des Härtebehandlungsvorgangs die Zugspannung, die bei dem Profil während des Profilstreckvorgangs auftritt, dadurch gesteuert wird, dass die hinteren Zuführwalzen (3) und die vorderen Zugwalzen (4) durch voneinander unabhängige Antriebseinheiten (5 bzw. 6) angetrieben werden, wobei die Antriebseinheiten (5, 6) so ausgebildet sind, dass eine kontinuierliche und unabhängige Steuerung der relativen Umfangsgeschwindigkeiten der Walzen möglich ist, wodurch die Relativposition des Profils (1) während des Profilstreckvorgangs festgelegt wird, wobei die Zugspannung, die bei dem Profil auftritt, zu jenem Zeitpunkt berechnet wird, wodurch auf der Grundlage dieser Daten sowie auf der Grundlage vorbestimmter Bezugsdaten, welche das vorgegebene Profil betreffen, die Zugspannung kontrolliert und auf einen Wert eingestellt wird, der auf der Grundlage der Bezugsdaten bestimmt wird, unter Zuhilfenahme der Antriebseinheiten (5, 6).

2. Verfahren nach Anspruch 1, dadurch gekennzeichnet, dass die Zugspannung, die bei dem Profil auftritt, in Signalform einem Computer (11) zugeführt wird, in welchem die vorbestimmten Bezugsdaten gespeichert sind, wobei der Computer zum Steuern und Einstellen der Zugspannung des Profils auf der Grundlage der Daten eingesetzt wird.

3. Verfahren nach einem der voranstehenden Ansprüche, dadurch gekennzeichnet, dass der ermittelte Zugspannungssteuerwert auf Daten beruht, die zusammen mit einer Mess- und Steueroperation nach dem Härtevorgang erhalten wurden, und die Genauigkeit der Form des Profils betreffen, beispielsweise dessen Geradlinigkeit, Verzerrung und Ebenheit, und ebenfalls die Materialeigenschaften des Profils, beispielsweise dessen maximal zulässige technische Streckgrenze.

4. Verfahren nach einem der voranstehenden Ansprüche, gekennzeichnet durch Einsatz des Verfahrens zum Steuern der Zugspannung eines profilierten Elements, bei welchem Teile ausgebildet wurden, die in bezug auf die mechanische Festigkeit weicher sind, durch abschnittsweise Steuerung des Härtevorgangs.

5. Verfahren nach einem der voranstehenden Ansprüche, gekennzeichnet durch Verwendung von Gleichstrommotoren, deren Geschwindigkeiten elektronisch regelbar sind, als die Antriebseinheiten (5, 6).

## Revendications

1. Un procédé de trempe d'éléments profilés (1) produit par profilage ou conformation de largets tout en utilisant un dispositif de traitement thermique qui comprend une zone de durcissement (2) munie d'un inducteur (7) et d'une disposition d'arrosage à l'eau (10), dans lequel les profilés sont amenés à travers la zone de durcissement au moyen de rouleaux d'amenée dits entraînés arrière (3) et de rouleaux de traction dits entraînés avant (4) montés sur les côtés respectifs de la zone de durcissement et entraînés en rotation à des vitesses périphériques mutuellement différentes de manière à maintenir le profilé étiré et éviter ainsi des changements dans la forme du profilé pendant le processus de durcissement, **caractérisé** en ce que, avec l'intention d'étirer de manière optimale un profilé donné pendant le processus de durcissement en relation avec les propriétés dudit profilé et ainsi en relation avec son aspect pendant le processus de traitement thermique, la contrainte de tension à laquelle est soumis le profilé pendant le processus d'étirement du profilé est contrôlée en entraînant les rouleaux d'amenée arrière (3) et les rouleaux d'entraînement avant (4) au moyen d'unités d'entraînement mutuellement indépendantes (5 et, respectivement 6), où lesdites unités d'entraînement (5, 6) sont réalisées pour permettre aux vitesses périphériques relatives desdits rouleaux d'être commandées de manière continue et indépendante, où la position relative du profilé (1) est déterminée pendant le processus d'étirement du profilé, où la contrainte de tension à laquelle est soumis le profilé est calculée à chaque moment dans le temps, de sorte que, sur la base de ces données et sur la base de données de référence prédéterminées concernant ledit profil considéré, la contrainte de tension est contrôlée et réglée à une valeur déterminée sur la base desdites données de référence, à l'aide desdites unités d'entraînement (5, 6).

2. Un procédé selon la revendication 1, **caractérisé** en ce que la contrainte de tension auxquelles est soumis le profilé en forme de signaux est amenée à un calculateur (11) dans lequel sont stockées les données de référence prédéterminées, où ledit calculateur, sur la base desdites données, est utilisé pour contrôler et régler la contrainte de tension du profilé.

3. Un procédé selon une quelconque des revendications précédentes, **caractérisé** en ce que la valeur de contrôle de la contrainte de tension déterminée est basée sur des données qui ont été obtenues en liaison avec une opération de mesure et de contrôle qui suit ledit processus de durcissement et concerne l'exactitude de forme du profilé, telle que sa rectitude, sa distorsion et sa planéité, ainsi que les propriétés matérielles du profilé, telles que sa limite élastique maximum permise en tension.

4. Un procédé selon une quelconque des revendications précédentes, **caractérisé** par le fait d'utiliser le procédé pour contrôler la contrainte de tension d'un élément profilé auquel a été donné des parties qui sont plus douces en ce qui concerne la résistance mécanique, par contrôle du processus de durcissement dans le sens de la section.

5. Un procédé selon une quelconque des revendications précédentes, **caractérisé** par l'utilisation, en tant qu'unités d'entraînement (5, 6), de moteurs à courant continu présentant des vitesses pouvant être commandées électroniquement.
